# EUROPEAN PATENT APPLICATION

(11) **EP 4 216 355 A1**
(43) Date of publication of application: **26.07.2023**
(21) Application number: 22788460.8
(22) Date of filing: 14.04.2022
(51) Int. Cl.: H01M 50/342, H01M 50/375, H01M 50/24, H01M 50/211

(54) **BATTERY MODULE AND BATTERY PACK COMPRISING SAME**

(30) Priority: 14.04.2021 KR 20210048791
(71) Applicant: LG Energy Solution, Ltd., Seoul 07335 (KR)
(72) Inventor: KIM, Kwangmo, Daejeon 34122 (KR); SEONG, Junyeob, Daejeon 34122 (KR); JUNG, Hyemi, Daejeon 34122 (KR)
(74) Representative: Goddar, Heinz J.
(86) International application number: PCT/KR2022/005389
(87) International publication number: WO 2022/220605

(57) **Abstract**

A battery module according to an embodiment of the present disclosure includes a battery cell stack in which a plurality of battery cells are stacked in one direction, a module frame that houses the battery cell stack and has an inner surface and an outer surface, and an end plate that is coupled with the module frame and covers the front surface or the rear surface of the battery cell stack, wherein the module frame is formed with at least one venting part in the form of a hole that defines an inlet port formed on the inner surface and an outlet port formed on the outer surface, and wherein the hole of the venting part is covered by a barrier layer.

## Description

### [TECHNICAL FIELD]

### Cross Citation with Related Application(s)

This application claims the benefit of Korean Patent Application No. 10-2021-0048791 filed on April 14, 2021 with the Korean Intellectual Property Office, the content of which is incorporated herein by reference in its entirety.

The present disclosure relates to a battery module and a battery pack including the same, and more particularly, to a battery module with enhanced safety, and a battery pack including the same.

### [BACKGROUND]

Along with the technology development and increased demand for mobile devices, demand for secondary batteries as energy sources has been increasing rapidly. Accordingly, many researches on the battery capable of meeting various demands are being performed.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of middle- or large-sized module structure which is an assembly of battery modules in which a plurality of secondary batteries are connected in series or in parallel.

Meanwhile, when a plurality of battery cells are connected in series or in parallel to configure a battery pack, it is common to configure a battery module composed of at least one battery cell and then configure a battery pack by using at least one battery module and adding other components. Since the battery cells constituting these middle or large-sized battery modules are composed of chargeable/dischargeable secondary batteries, such a high-output and large-capacity secondary battery generates a large amount of heat in a charge and discharge process.

The battery module may include a battery cell stack in which a plurality of battery cells are stacked, a frame that houses the battery cell stack, and end plates the cover the front and rear surfaces of the battery cell stack.

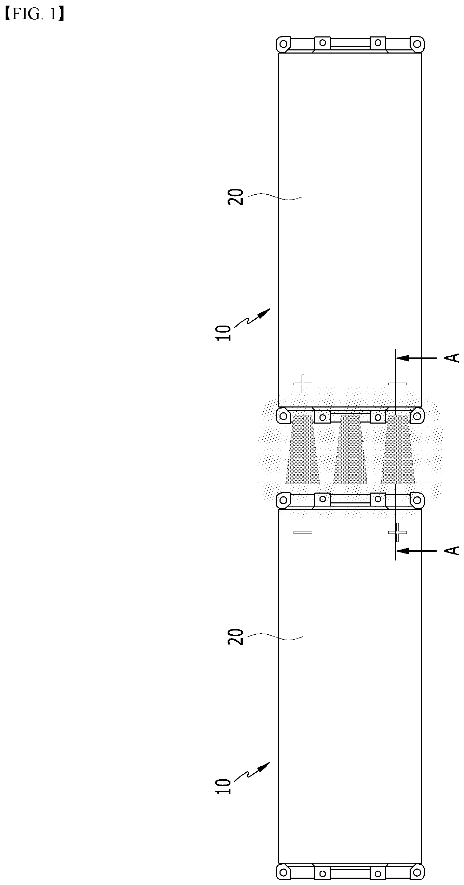

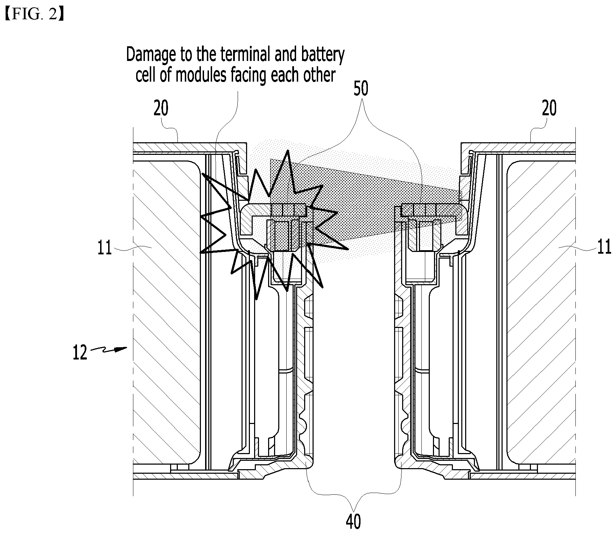

Fig. 1 is a diagram showing the appearance at the time of ignition of a battery module mounted on a conventional battery pack. Fig. 2 shows a section A-A of Fig. 1, which is a cross-sectional view showing the appearance of a flame that affects adjacent battery modules at the time of ignition of a battery module mounted on a conventional battery pack.

Referring to Figs. 1 and 2, the conventional battery module 10 includes a battery cell stack 12 in which a plurality of battery cells 11 are stacked, a module frame 20 that houses the battery cell stack 12, end plates 40 that are formed on the front and rear surfaces of the battery cell stack 12, a terminal busbar 50 formed so as to protrude out of the end plate, and the like.

The battery cell stack may be located in a closed structure by coupling the frame 20 and the end plate 40. Consequently, when the internal pressure of the battery cell 11 increases due to overcharging or the like, high-temperature heat, gas, or flame may be discharged to the outside of the battery cell 11, wherein the heat, gas, flame or the like discharged from one battery cell 11 may be transferred to other adjacent battery cells 11 at a narrow interval to induce a continuous ignition phenomenon. Additionally, the heat, gas, flame or the like discharged from each battery cell 11 may be discharged toward an opening formed in the end plate 40. In this process, there may be a problem that a busbar 50 or the like located between the end plate 40 and the battery cell 11 is damaged.

Moreover, the plurality of battery modules 10 in the battery pack are arranged such that at least two end plates 40 face each other, and thus, when the heat, gas, flame or the like generated within the battery module 10 is discharged to the outside of the battery module 10, it may affect the performance and stability of the plurality of battery cells 11 within other adjacent battery modules 10.

Therefore, there is a need to develop the battery module 10 having enhanced durability and safety by effectively delaying the heat propagation speed at the time of ignition inside the battery module 10 and allowing the generated heat, gas or flame to be rapidly discharged to the outside of the battery module 10

### [DETAILED DESCRIPTION OF THE INVENTION]

### [Technical Problem]

It is an object of the present disclosure to provide a battery module that is enhanced in safety by effectively suppressing high-temperature heat and flame discharged when an ignition phenomenon occurs inside the battery module, and a battery pack including the same.

However, the problem to be solved by the embodiments of the present disclosure is not limited to the above-described problems, and can be variously expanded within the scope of the technical idea included in the present disclosure.

### [Technical Solution]

According to one aspect of the present disclosure, there is provided a battery module comprising: a battery cell stack in which a plurality of battery cells are stacked in one direction, a module frame that houses the battery cell stack and has an inner surface and an outer surface, and an end plate that is coupled with the module frame and covers the front surface or the rear surface of the battery cell stack, wherein the module frame is formed with at least one venting part in the form of a hole that defines an inlet port formed on the inner surface and an outlet port formed on the outer surface, and wherein the hole of the venting part is covered by a barrier layer.

The barrier layer may include a material having a melting point of about 200°C or less.

The barrier layer may include heat-resistant plastic, CFRP (Carbon Fiber Reinforced Plastic), GFRP (Glass Fiber Reinforced Plastics), Mica-based material, Ceramic-based material, or silicon.

The barrier layer may include at least one fire extinguishing agent selected from the group consisting of inorganic carbonates, inorganic phosphates, and inorganic sulfates.

The barrier layer may be located between one surface of the module frame on which the venting part is formed and the battery cell stack.

The barrier layer may fill the inner space of the hole of the venting part.

The barrier layer may include a first barrier layer that fills the inner space of the hole of the venting part and a second barrier layer that is located between one surface of the module frame on which the venting part is formed and the battery cell stack.

When a direction in which the plurality of battery cells are stacked is defined as a stacking direction, the venting part is formed on one surface of the module frame extending along the stacking direction.

The venting part may be formed on the upper surface of the module frame.

The discharge direction of the venting part may form an acute angle with one surface of the module frame on which the venting part is formed, and the discharge direction of the venting part may be a direction from the inlet port to the outlet port.

The plurality of battery cells includes a first battery cell and a second battery cell, and when a first portion of the barrier layer corresponding to a first venting part formed at the position corresponding to the first battery cell is opened, a second portion of the barrier layer corresponding to a second venting part formed at a position corresponding to the second battery cell may not be opened.

According to another aspect of the present disclosure, there is provided a battery pack comprising the above-mentioned battery module.

### [Advantageous Effects]

According to embodiments of the disclosure, a module frame in which a hole is formed and a cover for covering the hole can be embodied gin the battery module, whereby before a flame occurs, a hole can be closed, thus preventing contaminants from entering the inside of the battery module from the outside, and when a flame occurs, a hole can be opened, thus suppressing high-temperature heat, gas, and flame through oxygen blocking and gas discharge.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing the appearance at the time of ignition of a battery module mounted on a conventional battery pack;
Fig. 2 shows a section A-A of Fig. 1, which is a cross-sectional view showing the appearance of a flame that affects adjacent battery modules at the time of ignition of a battery module mounted on a conventional battery pack;
Fig. 3 is a perspective view which shows an example of a battery module according to an embodiment of the present disclosure;
Fig. 4 is an exploded perspective view of the battery module of Fig. 3;
Fig. 5 is a perspective view of a battery cell included in the battery module of Fig. 4;
Fig. 6 is a cross-sectional view taken along the cutting line B-B of Fig. 3;
Fig. 7 is a cross-sectional view which shows the appearance after a thermal decomposition reaction when a flame occurs in a battery module according to an embodiment of the present disclosure; and
Fig. 8 is a cross-sectional view which shows a battery module according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Below, a battery module according to an embodiment of the present disclosure will be described.

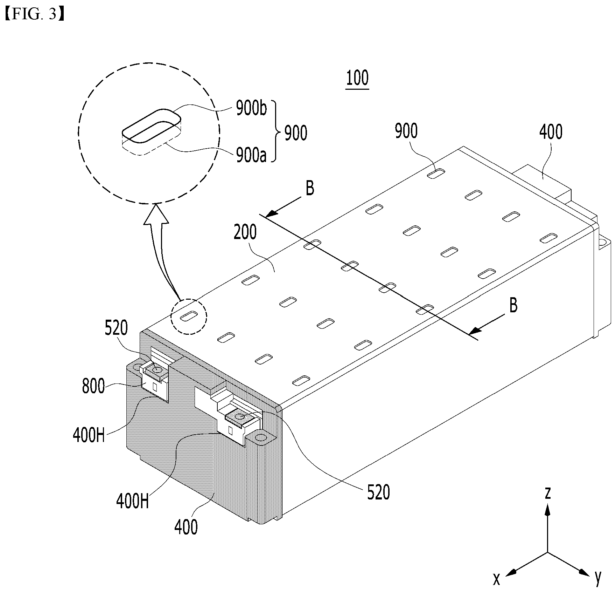

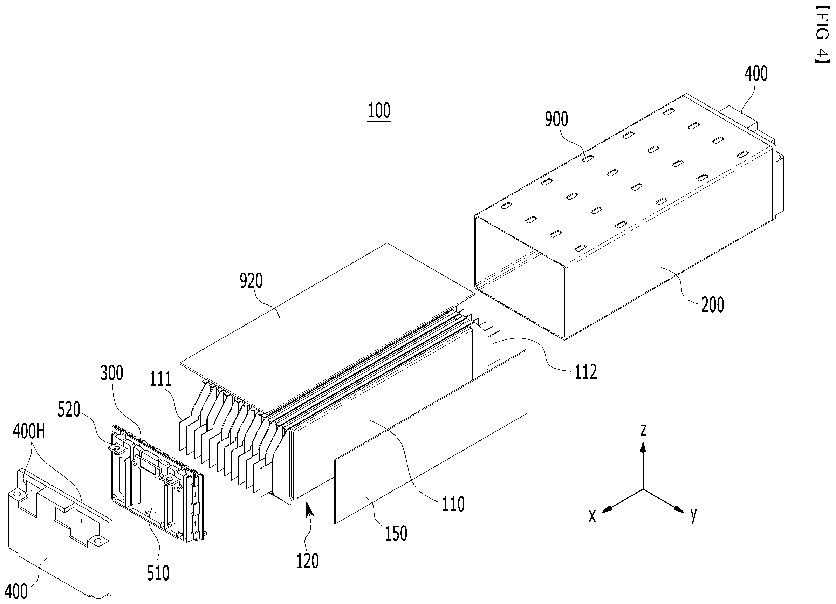

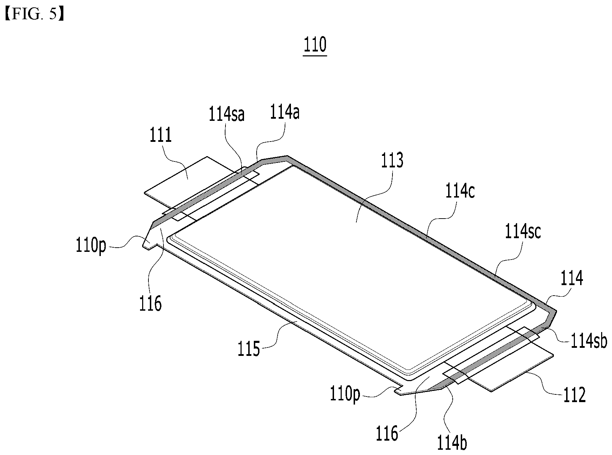

Fig. 3 is a perspective view which shows an example of a battery module according to an embodiment of the present disclosure. Fig. 4 is an exploded perspective view of the battery module of Fig. 3. Fig. 5 is a perspective view of a battery cell included in the battery module of Fig. 4.

Referring to Figs. 3 and 4, a battery module 100 according to one embodiment of the present disclosure includes: a battery cell stack120 in which a plurality of battery cells 110 are stacked in one direction, a module frame 200 that houses the battery cell stack 120, a busbar frame 300 located on the front surface and/or the rear surface of the battery cell stack 120, an end plate 400 that covers the front surface and/or the rear surface of the battery cell stack 120, and busbars 510 and 520 mounted on the busbar frame 300.

The battery cells 110 according to the present embodiment can be provided in a pouch shape in which the number of cells stacked per unit area can be maximized. The battery cell 110 provided in the pouch shape can be manufactured by housing an electrode assembly including a positive electrode, a negative electrode, and a separator in a cell case 114 of a laminate sheet and then heat-sealing the sealing part of the cell case 114. However, it will be obvious that the battery cell 110 need not be essentially provided in a pouch shape, and can be provided in a square, cylindrical, or other various forms, at a level where the storage capacity required by the device to be mounted in the future is achieved.

Referring to Fig. 5, the battery cell 110 may include two electrode leads 111 and 112. The electrode leads 111 and 112 may have a structure protruding from one end of the cell main body 113, respectively. Specifically, one end of respective electrode leads 111 and 112 is located inside the battery cell 110 and thus is electrically connected to the positive electrode or negative electrode of the electrode assembly, and the other end of the respective electrode leads 111 and 112 is protruded to the outside of the battery cell 110, and thus can be electrically connected with a separate member, for example, busbars 510 and 520.

The electrode assembly in the cell case 114 can be sealed by the sealing parts 114sa, 114sb and 114sc. The sealing parts 114sa, 114sb and 114sc of the cell case 114 may be located on both end parts 114a and 114b and one side part 114c connecting them.

The cell case 114 is generally formed of a laminate structure of a resin layer/metallic thin film layer/resin layer. For example, when a surface of the cell case is formed of an O(oriented)-nylon layer, it tends to slide easily by an external impact when stacking a plurality of battery cells 110 in order to form a medium- or large-sized battery module 100. Therefore, in order to prevent this sliding and maintain a stable stacking structure of the battery cells 110, an adhesive member, for example, a sticky adhesive such as a double-sided tape or a chemical adhesive coupled by a chemical reaction upon adhesion, can be adhered to the surface of the cell case 114 to form a battery cell stack 120.

A connection part 115 may refer to a region extending along the longitudinal direction at one end of the cell case 114 in which the above-mentioned sealing parts 114sa, 114sb and 114sc are not located. A protrusion part 110p of the battery cell 110 called a bat-ear may be formed at an end part of the connection part 115. Further, a terrace part 116 may refer to a region between electrode leads 111 and 112 in which a part protrudes to the outside of the cell case 114, and the cell main body 113 located inside the cell case 114, on the basis of the edge of the cell case 114.

Meanwhile, the battery cell 110 provided in the pouch type may have a length, a width and a thickness, and the longitudinal direction, the width direction, and the thickness direction of the battery cell 110 may be a direction perpendicular to each other.

Here, the longitudinal direction of the battery cell 110 may be defined in accordance with the direction in which the electrode leads 111 and 112 protrude from a cell case 114. The longitudinal direction of the battery cell 110 may be defined as an x-axis direction or a -x-axis direction.

Also, the width direction of the battery cell 110 herein may be a z-axis direction or a -z-axis direction from one side part 114c of battery cell 110 to a connection part 115 or from the connection part 115 to the one side part 114c of the battery cell 110 as shown in Fig. 4. Further, the thickness direction of the battery cell 110 herein may be defined as a y-axis direction or a -y-axis direction perpendicular to the width direction and the length direction.

The battery cell stack 120 may be one in which a plurality of electrically connected battery cells 110 are stacked along one direction. A direction in which the plurality of battery cells 110 are stacked (hereinafter referred to as a 'stacking direction') may be a y-axis direction as shown in Figs. 3 and 4 (or it may be a -y-axis direction, and in the following, the expression 'axial direction' may be interpreted as including all +/- directions).

Here, a direction in which the battery cell stack 120 heads from the front surface to the rear surface, or a backward direction thereof may be defined as the longitudinal direction of the battery cell stack 120, which may be an x-axis direction. Further, a direction in which the battery cell stack 120 heads from the upper surface to the lower surface, or a backward direction thereof may be defined as the width direction of the battery cell stack 120, which may be a z-axis direction.

The longitudinal direction of the battery cell stack 120 may be substantially the same as the longitudinal direction of the battery cells 110. At this time, the electrode leads 111 and 112 of the battery cells 110 may be located on the front surface and the rear surface of the battery cell stack 120. At this time, the busbars 510 and 520 of the battery module 100 may be arranged close to the front surface and the rear surface of the battery cell stack 120 so as to easily form an electrical connection with the electrode leads 111 and 112.

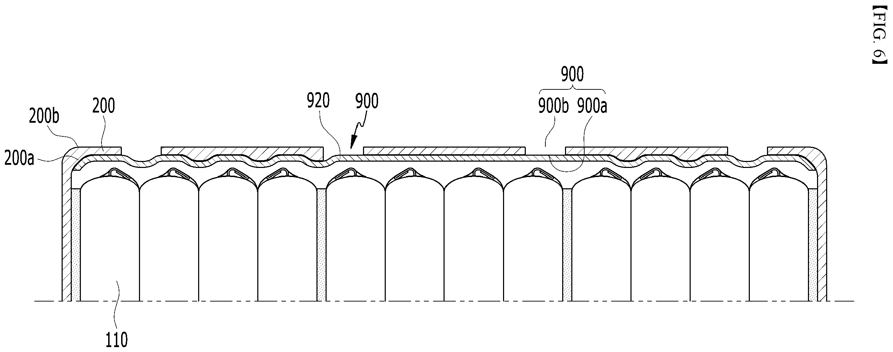

The module frame 200 may be for the purpose of protecting the battery cell stack 120 and the electrical components connected thereto from external physical impacts. The module frame 200 may be housed in the internal space of the battery cell stack 120 and the electric device module frame 200 connected thereto. Here, the module frame 200 includes an inner surface 200a (see Fig. 6) and an outer surface 200b (see Fig. 6), and the inner space of the module frame 200 may be defined by the inner surface 200a.

The module frame 200 may have various structures. In one example, the structure of the module frame 200 can be a mono frame structure. Here, the mono frame may be in a metal plate shape in which the upper surface, the lower surface and both side surfaces are integrated. The mono frame can be manufactured by extrusion molding. In another example, the structure of the module frame 200 may be a structure in which a U-shaped frame and an upper plate (upper surface) are combined. In the case of a structure in which the U-shaped frame and the upper plate are combined, the structure of the module frame 200 may be formed by coupling the upper plate to the upper side surfaces of the U-shaped frame, which is a metal plate in which the lower surface and both side surfaces are combined or integrated. Each frame or plate can be manufactured by press molding. Further, the structure of the module frame 200 can be provided in the structure of an L-shaped frame in addition to the mono frame or the U-shaped frame, and may be provided in various structures that are not described in the above-mentioned examples.

The structure of the module frame 200 may be provided in a shape that is opened along the longitudinal direction of the battery cell stack 120. The front surface and the rear surface of the battery cell stack 120 may not be covered by the module frame 200. The electrode leads 111 and 112 of the battery cells 110 may not be covered by the module frame 200. The front surface and the rear surface of the battery cell stack 120 may be covered by the busbar frame 300, the end plate 400, the busbars 510 and 520, or the like, which will be described later. Thereby, the front surface and the rear surface of the battery cell stack 120 can be protected from external physical impacts and the like.

Meanwhile, a compression pad 150 may be located between the battery cell stack 120 and one side surface of the inner surface of the module frame 200. At this time, the compression pad 150 may be located on the y-axis of the battery cell stack 120, and may face at least one surface of the two battery cells 110 at both ends of the battery cell stack 120.

Further, although it is not shown in the figure, a thermal conductive resin may be injected between the battery cell stack 120 and the lower surface of the module frame 200, and a thermal conductive resin layer (not shown) may be formed between the battery cell stack 120 and the lower surface of the module frame 200 through the injected thermal conductive resin. At this time, the thermal conductive resin layer may be located on the z-axis of the battery cell stack 120, and the thermal conductive resin layer may be formed between the battery cell stack 120 and the bottom surface (or may be referred to as a bottom part) located on the -z axis of the module frame 200.

The busbar frame 300 can be located on one surface of the battery cell stack 120 to cover one surface of the battery cell stack 120 and, at the same time, guide the connection between the battery cell stack 120 and an external device. The busbar frame 300 may be located on the front surface or the rear surface of the battery cell stack 120. At least one of the busbars 510 and 520 and the module connector may be mounted on the busbar frame 300. As a specific example, referring to Figs. 3 and 4, one surface of the busbar frame 300 is connected with the front surface or rear surface of the battery cell stack 120, and the other surface of the busbar frame 300 may be connected with the busbars 510 and 520.

The busbar frame 300 may include an electrically insulating material. The busbar frame 300 can restrict the busbars 510 and 520 from making contact with other parts of the battery cells 110, except the parts where they are joined to the electrode leads 111 and 112, and can prevent the occurrence of an electrical short circuit.

Although it is not shown in the figure, the busbar frame 300 may be formed in two numbers, and may include a first busbar frame (may be called drawing number 300) located on the front surface of the battery cell stack 120 and a second busbar frame (not shown) located on the rear surface of the battery cell stack 120.

The end plate 400 can be for the purpose of protecting the battery cell stack 120 and electrical equipment connected thereto from external physical impacts by sealing the opened surface of the module frame 200. For this purpose, the end plate 400 may be made of a material having a predetermined strength. For example, the end plate 400 may include a metal such as aluminum.

The end plate 400 may be coupled (joined, sealed or closed) to the module frame 200 while covering the busbar frame 300 or the busbars 510 and 520 located on one surface of the battery cell stack 120. Each edge of the end plate 400 may be coupled to a corresponding edge of the module frame 200 by a method such as welding. Further, an insulating cover 800 for electrical insulation may be located between the end plate 400 and the busbar frame 300. The insulating cover 800 may be located on the inner surface of the end plate 400 and may be brought into close contact with the inner surface of the end plate 400, but this is not always the case.

The end plate 400 may be formed in two numbers, and may include a first end plate located on the front surface of the battery cell stack 120 and a second end plate located on the rear surface of the battery cell stack 120.

The first end plate can be coupled with the module frame 200 while covering the first busbar frame on the front surface of the battery cell stack 120, and the second end plate can be coupled with the module frame 200 while covering the second busbar frame. In other words, a first busbar frame may be located between the first end plate and the battery cell stack 120, and a second busbar frame may be located between the second end plate and the rear surface of the battery cell stack 120.

The busbars 510 and 520 may be mounted on one surface of the busbar frame 300, and may be for the purpose of electrically connecting the battery cell stack 120 or the battery cells 110 and an external device circuit. The busbars 510 and 520 are located between the battery cell stack 120 or the busbar frame 300 and the end plate 400, whereby they can be protected from external impacts and the like, and deterioration of durability due to external moisture and the like can be minimized.

The busbars 510 and 520 can be electrically connected to the battery cell stack 120 through the electrode leads 111 and 112 of the battery cells110. Specifically, the electrode leads 111 and 112 of the battery cells 110 pass through a slit formed in the busbar frame 300 and then are bent to be connected to the busbars 510 and 520. The battery cells 110 constituting the battery cell stack 120 may be connected in series or in parallel by the busbars 510 and 520.

The busbars 510 and 520 may include a terminal busbar 520 for electrically connecting one battery module 100 to another battery module 100. At least a part of the terminal busbar 520 may be exposed to the outside of the end plate 400 in order to be connected with another external battery module 100, and the end plate 400 may be provided with a terminal busbar opening 400H for this purpose.

The terminal busbar 520 may further include a protrusion part that is protruded upward, unlike other busbars 510, and the protrusion part may be exposed to the outside of the battery module 100 via a terminal busbar opening 400H. The terminal busbar 520 may be connected with another battery module 100 or a BDU (Battery Disconnect Unit) via a protrusion part exposed through the terminal busbar opening 400H, and may form a high voltage (HV) connection with them.

Although it is not shown in the figure, the battery module 100 may include a sensing member that can detect and control phenomena such as overvoltage, overcurrent, and overheating of each battery cell 110. The sensing member may include a temperature sensor for detecting the temperature inside the battery module, a sensing terminal for sensing the voltage value of the busbars 510 and 520, a module connector for transmitting the collected data to an external controller and receiving a signal from the external controller, and/or a connection member for connecting them.

Here, the connection member may be arranged in a form extending along the longitudinal direction from the upper surface of the battery cell stack 200. The connection member may be a flexible printed circuit board (FPCB) or a flexible flat cable (FFC).

Further, the module connector herein may transmit data obtained from the temperature sensor and/or the sensing terminal to a BMS (Battery Management System), and the BMS may control charging and discharging of the battery cells 110 based on the collected voltage data. The module connector may be mounted on the busbar frame 300 described above. At least a part of the module connector may be exposed to the outside of the end plate 400, and the end plate 400 may be provided with a module connector opening (not shown) for that purpose. In this manner, the end plate 400 may be formed with the terminal busbar opening 400H and the module connector opening, etc. which may be collectively referred to as 'openings'.

Meanwhile, as described above, an ignition phenomenon may occur inside the battery module 100 in which the battery cells 110 are stacked at a high density. When an ignition phenomenon occurs in one battery module 100, heat, gas, flame or the like of the battery module 100 are transferred to the battery module 100 adjacent thereto, so that a continuous ignition phenomenon occurs between the battery modules 100, which causes a problem that the durability and stability of the battery module 100 or a battery pack including the same is reduced.

Therefore, the venting part 900 and the barrier layer 920 that can eliminate the above-mentioned ignition phenomenon and thus improve the durability and stability of the battery module 100 will be described below.

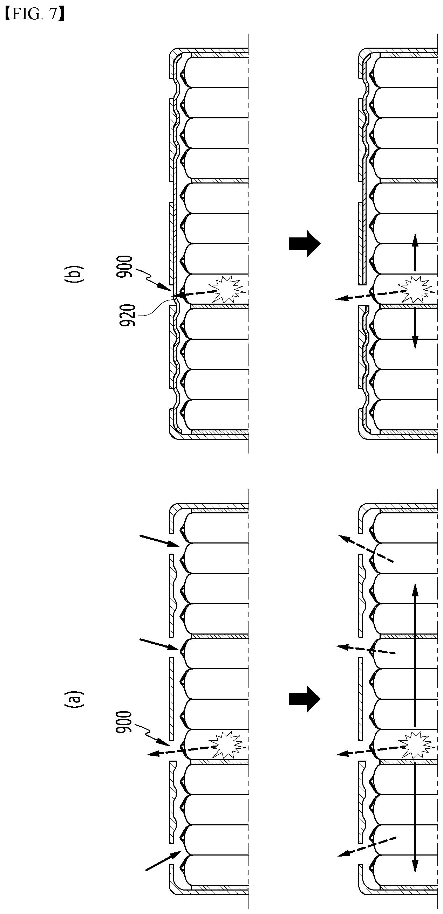

Fig. 6 is a cross-sectional view taken along the cutting line B-B of Fig. 3. Fig. 7 is a cross-sectional view which shows the appearance after a thermal decomposition reaction when a flame occurs in a battery module according to an embodiment of the present disclosure.

Referring to Figs. 6 and 7, the module frame 200 according to an embodiment of the present disclosure may include a venting part 900 that penetrates an inner surface 200a and an outer surface 200b of the module frame 200.

The venting part 900 may be for the purpose of communicating the inside of the battery module 100 sealed by the module frame 200, the end plate 400 or the like with the outside of the battery module 100. The venting part 900 may be for the purpose of discharging heat, gas, flame or the like generated at the time of ignition in the inside of the battery module 100 to the outside of the battery module 100.

The venting part 900 may have a hole shape communicating an inlet port 900a formed on the inner surface 200a of the module frame 200 and an outlet port 900b formed on the outer surface 200b of the module frame 200.

The venting part 900 may be formed on at least one surface of the module frame 200. Here, the module frame 200 may be in a state in which two surfaces arranged to face each other on the x-axis, which is the longitudinal direction of the battery cell stack 120, are opened. The module frame 200 may have two surfaces arranged so as to face each other on the y-axis axis (hereinafter, referred to as 'surface on the y-axis') and two surfaces arranged so as to face each other on the z-axis axis (hereinafter, referred to as 'surface on the z-axis'). Two surfaces facing each other on the opened x-axis of the module frame 200 may be mainly covered by the end plate 400 or the like.

The battery modules 100 in the battery pack are mainly arranged so as to face the terminal busbars 520 for HV connection, and the flame or the like generated in one battery module 100 may be transmitted to another adjacent battery module 100 via an opening formed in the end plate 400 , for example, a terminal busbar opening 400H. When the heat inside the battery module 100 is transferred to the end plate 400 in this way, the external busbars that electrically connect (HV connection) battery modules 100 adjacent to each other may melt, which causes further ignition due to an internal short circuit, and the thermal runaway phenomenon may be transferred to the adjacent battery modules.

However, when the venting part 900 is formed in the module frame 200, the discharge of high-temperature heat, gas, flame and the like resulting from the battery cell 110 through the terminal busbar opening 400H can be minimized, and damage to the adjacent battery module 100 and the HV connection structure of the battery module 100 can be minimized.

Here, one surface on the y-axis of the module frame 200 may be a surface extending along the width direction or the length direction of the battery cell stack 120. One surface on the y-axis of the module frame 200 may face one surface of one battery cell 110. For convenience of explanation, one surface on the y-axis of the module frame 200 may be referred to as a side surface of the module frame 200.

Further, here, one surface on the z-axis of the module frame 200 may be a surface extending along the stacking direction or the longitudinal direction of the battery cell stack 120. One surface on the z-axis of the module frame 200 may face one surface of each of the plurality of battery cell stacks 120 arranged side by side in one direction. For convenience of explanation, one surface on the z-axis of the module frame 200 may also be referred to as an upper surface or a lower surface (bottom surface or bottom part).

As shown in Figs. 6 and 7, the venting part 900 may be preferably formed on one surface on the z-axis of the module frame 200. This may be because, when the venting part 900 is located on one surface on the z-axis of the module frame 200, the inlet port 900a of the venting part 900 may be located closer to the plurality of battery cells 110 of the battery cell stack 120 than when located on one surface on the y-axis, so that heat, gas, or flame discharged from the plurality of battery cells 110 can be rapidly discharged to the outside. In this manner, the position of the venting part 900 on the module frame 200 may be determined depending on the position of one surface of the battery cell stack 120 in which one surface of the plurality of battery cells 110 are arranged side by side.

The position of the venting part 900 on the module frame 200 can be determined in accordance with the arrangement of the battery module 100 within the battery pack. For example, the plurality of battery modules 100 may be arranged along a first direction (y-axis or x-axis) in the battery pack, and may not be arranged in a second direction (z-axis direction). At this time, as shown in Figs. 6 and 7, when the venting part 900 is formed on one surface on the z-axis (second direction) of the module frame 200, other adjacent battery modules 100 are not located on the discharge path extending from the inlet port 900a to the outlet port 900b of the venting part 900, thereby being able to minimize the influence of the discharged heat, gas, or flame on other battery modules 100. Meanwhile, when the surface on the -z-axis among the two surfaces on the z-axis is the mounting surface connected to the battery pack, the venting part 900 may be formed on the +z axis.

The venting part 900 may be formed entirely on one surface of the module frame 200 as shown in the above figures, but this is not always the case, and it may be formed on a part of one surface of the module frame 200. Further, although it is not shown in the figure, the venting part 900 may be formed on a plurality of surfaces of the module frame 200.

The number of venting parts 900 may be two or more, and when the number of the venting parts 900 is plural, the venting parts 900 may be arranged in rows/columns.

The shape of the inlet port 900a and the outlet port 900b of the venting part 900 may be a round shape having a curvature as shown in the above-mentioned figure, but this is not always the case, and it may be provided as a circle, an ellipse, or a polygon having vertices. In addition, it is preferable that the heat, gas, or flame discharged through the venting part 900 diffuse more rapidly to the outside of the battery module 100. Therefore, the size of the outlet port 900b may be larger than that of the inlet port 900a.

Meanwhile, the direction from the inlet port 900a to the outlet port 900b of the venting part 900 may be a discharge direction in which the gas inside the battery module 100 is discharged to the outside. In the above-mentioned figure, the direction from the inlet port 900a to the outlet port 900b of the venting part 900 is illustrated as being perpendicular to one surface of the module frame 200 in which the venting part 900 is formed, but this is not always the case. By changing the positions of the inlet port 900a and the outlet port 900b of the venting part 900, a hole structure may be formed such that the discharge direction forms an acute angle with one surface of the module frame 200. By having the structure in which the hole of the venting parti 900 is inclined in this way, the exposure inside the battery module 100 is minimized, and a phenomenon where foreign matters floating in the air enter the inside of the battery module 100 due to gravity can be prevented.

When the discharge direction forms an angle (acute angle) by changing the positions of the inlet port 900a and the outlet port 900b of the venting part 900, the direction of heat, gas, or flame discharged from the venting part 900 may be switched (adjusted). Due to this, the length of the discharge path may increase, and the gas discharged through the outlet port 900b of the venting part 900 may have a lower temperature. In addition, when the discharge direction of the venting part 900 is formed in a direction in which the adjacent battery module 100 is not located, the phenomenon where heat is propagated between adjacent battery modules 100 can be minimized.

When the number of the venting part 900 is plural, the discharge directions of the plurality of venting parts 900 may be the same or different from each other. When the discharge directions of the plurality of venting parts 900 are formed so as to be different from each other, the gas or the like discharged from the venting part 900 may be diffused in a wider space outside the battery module 100 in various directions. Thereby, the gas may be rapidly discharged from the battery module 100, and an effect such as the prevention of heat generation of the battery module 100 can be achieved.

Meanwhile, when the module frame 200 is provided with a venting part 900 for communicating the inside and the outside, dust, impurities, etc. outside the module frame 200 may enter the inside of the module frame 200 via a hole structure of the venting part 900. Further, when an ignition occurs inside the module frame 200, a phenomenon may occur in which the internal ignition is promoted by supplying external oxygen along the vent part 900. Therefore, it may be preferable that the venting part 900 is provided with a separate member for closing the hole.

Referring to Figs. 6 and 7 again, the battery module 100 according to an embodiment of the present disclosure may include a barrier layer 920 that covers (hides) the opening of the hole structure of the venting part 900.

Here, it is clarified in advance that the expression 'barrier layer' is used to express the shape of a film for blocking the hole of the venting part 900, and it can be changed and expressed into a cover, a stopper, a hood, a stopper, a cap, or other similar words.

The barrier layer 920 can be provided in the form of a plate for covering the hole of the venting part 900. The barrier layer 920 can be provided in the form of a pad for covering the hole of the venting part 900. The barrier layer 920 can cover the hole of the venting part 900 by being arranged so as to cover the inlet port 900a or the outlet port 900b.

The barrier layer 920 may be located under one surface of the module frame 200 on which the venting part 900 is formed. As an example, in Fig. 6, the barrier layer 920 is illustrated as being located between the upper surface of the battery cell stack 120 and the upper surface of the module frame 200, but this is not always the case. When the venting part 900 is formed on the side surface of the module frame 200, it may be located between the side surface of the battery cell stack 120 and the side surface of the module frame 200. Here, for convenience of assembly, the barrier layer 920 may be attached to the inner surface 200a of the module frame 200, but this is not always the case.

Meanwhile, the barrier layer 920 generally closes the hole of the venting part 900 to thereby prevent external oxygen, dust, or impurities from entering the inside of the battery module 100, but when the ignition occur inside the battery module 100, the hole of the venting part 900 can be opened.

The barrier layer 920 may be made of a material that can withstand in a high temperature and high pressure environment for a certain period of time. For example, the barrier layer 920 may be made of heat-resistant plastic, carbon fiber reinforced plastic (CFRP), glass fiber reinforced plastics (GFRP), Mica-based material, or Ceramic-based material. The barrier layer 920 may be an injection product that can withstand in a high temperature and high pressure environment for a certain period of time. As another example, the barrier layer 920 may be a silicon pad made of silicon.

The barrier layer 920 may include a material that is melted by the internal temperature of the module frame 200. The barrier layer 920 may include a material that is melted the by heat, high-temperature gas, or spark discharged from the battery cell 110. The barrier layer 920 can be made from a material having a melting point below a predetermined range. For example, the barrier layer 920 may include a thermoplastic polymer resin having a melting point of about 200°C or less. More specifically, the barrier layer 920 may be made from a material having a melting point of about 100°C or more and 200°C or less, such as polyethylene or polypropylene.

The barrier layer 920 may include a material for mitigating an ignition phenomenon when the ignition occurs inside the battery module 100. For example, the barrier layer 920 may include a fire extinguishing agent. When the barrier layer 920 includes a fire extinguishing agent, the battery module 100 can have a self-fire extinguishing function. Here, the fire extinguishing agent may be a fire extinguishing agent material in powder form. The fire extinguishing agent may generate carbon dioxide and water vapor through a thermal decomposition reaction when the ignition occurs inside the battery module 100, and the generated carbon dioxide and water vapor can suppress a flame by preventing external oxygen from flowing into the battery module 100. The fire extinguishing agent can absorb the heat generated in the battery module by performing a thermal decomposition reaction, which is an endothermic reaction, and external oxygen supply can also be cut off by generating carbon dioxide and water vapor. Thereby, the flame and heat propagation speed inside the battery module 100 can be effectively delayed, and the safety of the battery module can be improved.

The barrier layer 920 may include one or more fire extinguishing agents selected from the group consisting of inorganic carbonates, inorganic phosphates, and inorganic sulfates. More specific examples of the fire extinguishing agent material include sodium hydrogen carbonate (NaHCO₃), potassium hydrogen carbonate (KHCO₃), ammonium phosphate (NH₄H₂PO₃), a mixture of "potassium hydrogen carbonate (KHCO₃) and urea ((NH₂)₂CO)", and the like. When the barrier layer 920 includes potassium hydrogen carbonate (KHCO₃), potassium carbonate (K₂CO₃), water vapor (H₂O), and carbon dioxide (CO₂) may be produced through the thermal decomposition reaction of potassium hydrogen carbonate. The generated water vapor offsets the flame inside the battery module 100, and the carbon dioxide produced can block the flame from coming into contact with oxygen and the like. However, the fire extinguishing agent material of the present embodiment is not limited thereto, and can be used without limitation as long as it is a material capable of performing the fire extinguishing function.

In this manner, the barrier layer 920 can be provided by being made of materials having the above-described physical properties, but may be provided as a material containing a plurality of physical properties or a composite of materials containing each physical property. For example, the barrier layer 920 may be provided so as to include a material capable of withstanding in a high pressure environment for a certain period of time and having a melting point of about 200°C or less. As another example, the barrier layer 920 can be provided as a silicone pad containing a fire extinguishing agent. As another example, the barrier layer 920 can be formed of a thermoplastic polymer resin containing a fire extinguishing agent.

When flame, gas or spark is generated inside the battery module 100, specifically, in a part of battery cells 110, the barrier layer 920 around the ignition phenomenon may be physically torn or chemically melted and penetrated by heat or pressure, so that the hole of the venting part 900 can be opened. Heat, gas or sparks inside the battery module 100 may be discharged through the opened venting part 900, and the ignition phenomenon of the battery module 100 can be mitigated. Here, the process in which the barrier layer 920 is penetrated, that is, opened, may be accompanied by an endothermic reaction. Since the barrier layer 920 absorbs internal heat, the temperature inside the battery module 100 may be slightly lowered. Heat, gas, and the like discharged to the outside of the venting part 900 through the endothermic reaction of the barrier layer 920 may lose energy to the extent that it does not affect the adjacent battery module 100, and the spark loses energy and is changed into particles, which may not promote the thermal runaway phenomenon of the adjacent battery module 100. Meanwhile, the effect of the barrier layer 920 has been mainly described above focusing on the fact that the barrier layer 920 is opened through a chemical reaction. However, even when the barrier layer 920 is physically opened by pressure or the like, the kinetic energy of the gas or spark inside the barrier layer 920 is reduced. Therefore, the heat, gas and the like discharged to the outside of the venting part 900 may lose energy to the extent that it does not affect the adjacent battery module 100, and the spark loses energy and changes into particles, which may not be able to promote the thermal runaway phenomenon of the adjacent battery module 100.

Since the barrier layer 920 can be opened only when heat or pressure over a predetermined range is applied, only the venting part 900 located in the vicinity where the ignition phenomenon appears can be individually opened. Since the gas is discharged at the opened venting part 900, and the inflow of additional oxygen is blocked at the other closed venting part 900, so that fire suppression inside the battery module 100 can be achieved more quickly.

Specifically, as shown in Fig. 7(a), when the barrier layer 920 is not provided, external oxygen or the like may be easily flowed into the battery module 100 via the venting part 900. When an ignition phenomenon occurs inside the battery module 100, the internal flame is amplified by the external oxygen flowed in through the venting part 900, thereby promoting continuous ignition.

On the other hand, as shown in Fig. 7(b), when the barrier layer 920 is provided, a first portion of the barrier layer 920 located on the upper part of the first battery cell 110 in which the ignition phenomenon has occurred can be penetrated, and only the first venting part 900 corresponding to the first portion of the venting part 900 can be opened. That is, the second part of the barrier layer 920 located above the second battery cell 110 in which the ignition phenomenon does not occur may not be opened, and the second venting part 900 corresponding to the second part of the venting part 900 may be in a closed state. In this manner, since the venting parts 900 other than a part of the venting parts 900 are in a state of being closed by the barrier layer 920, the inflow of external oxygen into the battery module 100 can be blocked, whereby unlike Fig. 7(a), the flame or the like generated inside the battery module 100 can be suppressed form being amplified by the inflowing oxygen.

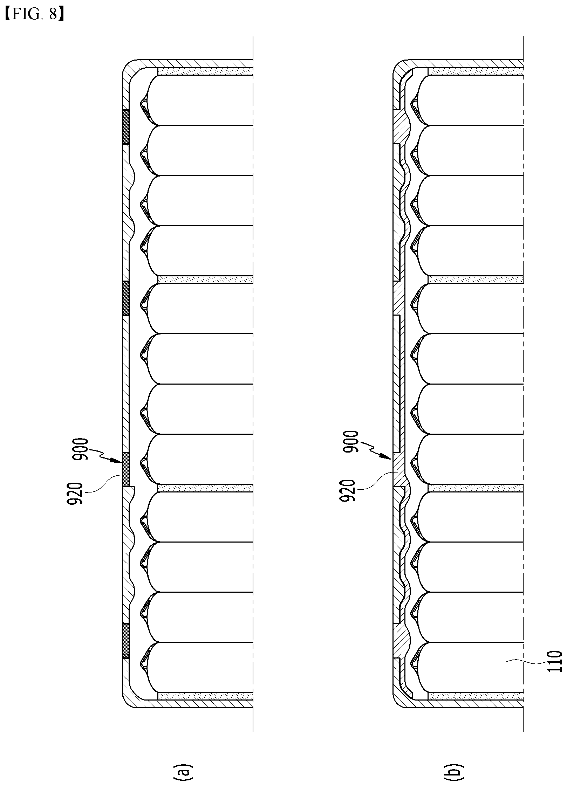

Fig. 8 is a cross-sectional view which shows a battery module according to another embodiment of the present disclosure.

Referring to Fig. 8, the barrier layer 920 of the present embodiment may be provided so as to fill the hole of the venting part 900.

Specifically, the barrier layer 920 may be provided in the form of a stopper that fills the inner space of the hole of the venting part 900 as shown in FIG. 8(a). Further, the barrier layer 920 may be provided in a form in which the form of a plug that fills the hole of the venting part 900 as shown in Fig. 8(b) and the form of a layer as shown in Figs. 6 and 7 are combined. When the barrier layer 920 is provided as shown in Fig. 8(b), the space occupied by the barrier layer 920 inside the battery module 100 is the same, but since the barrier layer 920 of two layers must be opened in order to open the venting part 900 of the battery module 100, the fire suppression effect by the barrier layer 920 can be further increased. Here, the barrier layer 920 in the form of a stopper that fills the hole of the venting part 900 may be referred to as a first barrier layer, and the barrier layer 920 in the form of a layer formed on the lower side of the venting part 900 may be referred to as a second barrier layer. At this time, the first barrier layer may be composed of a plurality of barrier layers that fill the interior of the plurality of venting parts 900. Further, the above-mentioned cap form and layer form can be integrally configured in a combined state, but this is not always the case, and can be provided individually in a separated state.

On the other hand, the above-mentioned battery module 100 may be included in the battery pack. The battery pack includes one or more battery modules according to the present embodiment, and may have a structure that is packed together with a battery management system (BMS) and a cooling device that control and manage battery's temperature, voltage, etc.

The battery module and the battery pack including the same can be applied to various devices. Such a device may be applied to a vehicle means such as an electric bicycle, an electric vehicle, or a hybrid vehicle, but the present disclosure is not limited thereto, and is applicable to various devices that can use a battery module and a battery pack including the same, which also falls under the scope of the present disclosure.

Although the preferred embodiments of the present disclosure has been shown and described above, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

100: battery module
110: battery cell
111, 112: electrode lead
120: battery cell stack
200: module frame
300: busbar frame
400: end plate
400H: terminal busbar opening
510: busbar
520: terminal busbar
800: insulation cover
900: venting part
920: barrier layer

## Claims

1. A battery module comprising:
a battery cell stack in which a plurality of battery cells are stacked in one direction,
a module frame that houses the battery cell stack and has an inner surface and an outer surface, and
an end plate that is coupled with the module frame and covers the front surface or the rear surface of the battery cell stack,
wherein the module frame is formed with at least one venting part in the form of a hole that defines an inlet port formed on the inner surface and an outlet port formed on the outer surface, and
wherein the hole of the venting part is covered by a barrier layer.

2. The battery module according to claim 1, wherein:
the barrier layer comprises a material having a melting point of about 200°C or less.

3. The battery module according to claim 1, wherein:
the barrier layer comprises heat-resistant plastic, CFRP (Carbon Fiber Reinforced Plastic), GFRP (Glass Fiber Reinforced Plastics), Mica-based material, Ceramic-based material, or silicon.

4. The battery module according to claim 1, wherein:
the barrier layer comprises at least one fire extinguishing agent selected from the group consisting of inorganic carbonates, inorganic phosphates, and inorganic sulfates.

5. The battery module according to claim 1, wherein:
the barrier layer is located between one surface of the module frame on which the venting part is formed and the battery cell stack.

6. The battery module according to claim 1, wherein:
the barrier layer fills an inner space of the hole of the venting part.

7. The battery module according to claim 1, wherein:
the barrier layer comprises a first barrier layer that fills an inner space of the hole of the venting part and a second barrier layer that is located between one surface of the module frame on which the venting part is formed and the battery cell stack.

8. The battery module according to claim 1, wherein:
when a direction in which the plurality of battery cells are stacked is defined as a stacking direction,
the venting part is formed on one surface of the module frame extending along the stacking direction.

9. The battery module according to claim 1, wherein:
the venting part is formed on the upper surface of the module frame.

10. The battery module according to claim 1, wherein:
the discharge direction of the venting part forms an acute angle with one surface of the module frame on which the venting part is formed, and
the discharge direction of the venting part is a direction from the inlet port to the outlet port.

11. The battery module according to claim 1, wherein:
the plurality of battery cells comprises a first battery cell and a second battery cell, and
when a first portion of the barrier layer corresponding to a first venting part formed at the position corresponding to the first battery cell is opened,
a second portion of the barrier layer corresponding to a second venting part formed at a position corresponding to the second battery cell is not opened.

12. A battery pack comprising at least one battery module according to claim 1.
